# EUROPÄISCHE PATENTSCHRIFT

(11) **EP 0 990 604 B1**
(45) Veröffentlichungstag und Bekanntmachung des Hinweises auf die Patenterteilung: **11.08.2004**
(21) Anmeldenummer: 99116891.5
(22) Anmeldetag: 07.09.1999
(51) Int. Cl.: B65G 17/34, B65G 47/50

(54) **Gliederförderer (Sorter) zum Sortieren von Stückgutteilen**
Link conveyor for sorting articles
Transporteur à palettes pour le triage d'articles

(30) Priorität: 02.10.1998 DE 19845527
(43) Veröffentlichungstag der Anmeldung: 05.04.2000
(73) Patentinhaber: Beumer Maschinenfabrik GmbH & Co. KG, 59267 Beckum (DE)
(72) Erfinder: Hintz, Andreas, Dr., 59267 Beckum (DE); Wylutzki, Gerhard, 59302 Oelde-Sünninghausen (DE)
(74) Vertreter: Hoormann, Walter, Dr.-Ing.

(56) Entgegenhaltungen:
- EP-A- 0 481 341
- EP-A- 0 662 433
- US-A- 5 701 992

## Beschreibung

Die Erfindung betrifft einen in der Praxis auch als Sorter bezeichneten Gliederförder zum Sortieren von Stückgutteilen (wie z.B. von Paketen in Postämtern) nach dem Oberbegriff des Anspruches1, wie er z.B. aus der US-A-5 701 992 bekannt ist.

Derartige Sorter sind in unterschiedlichster Ausgestaltung bekannt. Das Basisprinzip besteht darin, daß Stückgutteile, die in ungeordneter Reihenfolge anfallen (wie dieses bspw. bei Gepäckstücken auf Flughäfen der Fall ist, welche - ggf. erst nach einem längeren Zeitraum - einem bestimmten Gate eines bestimmten Terminals zugefördert werden sollen), unter bestimmten Gesichtspunkten geordnet (sortiert) werden, indem die zu diesem Zwecke i.a. vor ihrer Aufgabe auf den Sorter kodierten Stückgutteile an wenigstens einer Aufgabestelle (ggf. von Hand, i.a. jedoch mittels einer geeigneten Aufgabevorrichtung) auf den Sorter aufgegeben und von diesem sodann der vorgegebenen Abgabestelle zugefördert werden, an welcher sie in geeigneter Weise seitlich von dem Sorter abgegeben werden.

Zu diesem Zwecke werden die zu sortierenden Stückgutteile vor/bei ihrer Aufgabe auf den Sorter vereinzelt und jeweils einzeln auf einen Förderplatz des Sorters aufgegeben, und zwar (bei mehreren Aufgabestellen) vorzugsweise auf den nächsten sich der betreffenden Aufgabestelle nähernden freien Aufnahmeplatz des Sorters, um dessen Durchsatzkapazität so gut wie irgend möglich auszunutzen.

Um eine gezielte Abgabe der Stückgutteile an der jeweils vorgesehenen Abgabestelle zu bewirken, sind verschiedene Möglichkeiten/Ausgestaltungen bekannt. So sind bspw. seitlich der Förderbahn angeordnete sog. Pusher bekannt, die jeweils einer Abgabestelle gegenüber seitlich zum Sorter angeordnet sind und ein abzugebendes Stückgutteil mittels eines quer zur Förderrichtung des Sorters aktivierbaren Stößels vom Sorter herunterstoßen. Eine derartige Stückgutabgabe ist jedoch insb. bei relativ hoher Sortergeschwindigkeit für diverse Stückgüter völlig ungeeignet, weil dabei wegen der entsprechend geringen zur Verfügung stehenden Abgabezeit entsprechend hohe Pusherbeschleunigungen erforderlich sind, die beim Einwirken eines Pushers auf ein abzugebendes Stückgutteil mit einer entsprechend großen Stoßkraft auf das Stückgutteil einwirken.

Eine andere bekannte Möglichkeit der Stückgutabgabe von einem Sorter besteht in dem Einschwenken eines ebenfalls stationären Abweisers an einer Abgabestelle. Auch diese Entleerungs- bzw. Abgabemöglichkeit ist jedoch ersichtlich nur für Sorter mit relativ langsamer Fördergeschwindigkeit geeignet und weist selbst dann den Nachteil auf, daß ein abzugebendes Stückgutteil beim Gegenfahren gegen einen eingeschwenkten Abweiser relativ zu seiner Förderstellung um eine Vertikalachse verdreht wird, so daß es insb. bei relativ langen Stückgutteilen zu unkontrollierten Relativbewegungen zwischen Stückgut und Sorter bzw. Abgabestation kommen kann.

Bei den vorgenannten beiden Sortertypen ist es ersichtlich grundsätzlich nicht erforderlich, den Sorter als Gliederförderer auszubilden, obwohl dieses auch bei den vorgenannten oder ähnlichen Abgabe-Arbeitsweisen i.a. zweckmäßig ist.

Weiterhin sind sog. Kippschalensorter bekannt, die zwangsnotwendigerweise als Gliedertörderer ausgebildet sind, wobei der die Tragschale bzw. Tragplatte tragende obere Endabschnitt jedes Förderlementes aus seiner i.a. im wesentlichen parallelen Transportstellung an der Abgabestelle in eine schräge Kippstellung zu kippen ist, die ein seitliches Abgleiten des betreffenden Stückgutteils an der vorgesehenen Abgabestation bewirkt. Für derartige Kippschalensorter sind diverse unterschiedliche Ausgestaltungen bekannt. Ihr Grundprinzip besteht darin, daß an jeder Abgabestelle eine stationäre Kippeinrichtung vorhanden ist, die ggf. mit einem sich der betreffenden Abgabestelle nähernden Kippelement so in Eingriff gebracht werden kann, daß die Tragschale in der zuvor kurz beschriebenen Weise seitlich gekippt wird, und die nach dem Passieren der betreffenden Abgabestelle des betreffenden Förderelementes bewirkt, daß dessen Tragschale wieder in ihre aufgerichtete Transportstellung gebracht (und in dieser verriegelt) wird.

Auch bei diesen Kippschalensortern kann es ggf. bei der Abgabe zu einem Überschlagen (Trudeln") abgegebener Stückgutteile kommen, obwohl zwischenzeitlich bereits verschiedene Ausgestaltungen bekannt geworden sind, durch welche sich eine sehr gezielte und sanfte Abgabe erzielen läßt. Dieses ist bspw. dann der Fall, wenn die Kippschale während des Kippens zugleich abgesenkt wird. Dennoch ist auch bei diesen Kippschalenförderern i.a. nicht zu vermeiden, daß die abzugebenden Stückgutteile beim Abgeben auf ein niedrigeres Niveau gebracht werden, was insb. bei empfindlichen Stückgütern nachteilig ist.

Um insb. auch gerade empfindliche Stückgutteile jeweils an der für sie vorgesehenen Abgabestelle ohne Überwindung eines Reibungswiderstandes und die hierdurch häufig bewirkte Verdrehung beim Abgabevorgang und ohne Gefahr eines Überschlagens möglichst präzis und damit zielgenau sowie auf im wesentlichen gleichem Höhenniveau und damit insgesamt äußerst schonend sowie effektiv von einem Sorter abgeben zu können, sind Sorter entwickelt worden, deren Förder- bzw. Aufnahmeplätze jeweils aus einem sog. Quergurtförderer bestehen.

Diese Quergurtförderer weisen jeweils einen endlosen Fördergurt auf, der um zwei mit gegenseitigem Abstand angeordnete, in Förderrichtung des Sorters verlaufende Rollen bzw. Walzen umgelenkt ist, von denen die eine Rolle (ggf. über ein Getriebe) von einem an dem betreffenden Förderelement (bzw. einem benachbarten Förderelement) angeordneten, also mit dem Sorter umlaufenden Elektromotor so anzutreiben ist, daß das Obertrum des Quergurtförderers sich zur vorgesehenen Abgabestelle hin bewegt. Dabei ist der Quergurtförderer eines Förderelementes jeweils an einer Stützeinrichtung befestigt, welche unter Bildung einer aus sämtlichen Stützeinrichtungen bestehenden Gliederkette an ihrem vorderen und hinteren Endabschnitt gelenkig mit der Stützeinrichtung des vorhergehenden bzw. nachfolgenden Förderlementes verbunden ist, und die an ihrem dem Quergurtförderer abgekehrten unteren Endabschnitt an zwei parallelen, mit gegenseitigem Abstand angeordneten, die vorgegebene Förderbahn bestimmenden (Stütz- und Führungs-)Schienen abgestützt und geführt ist.

Wenn sich bei einem solchen gattungsgemäßen Sorter ein mit einem Stückgutteil belegtes Förderelement der vorgegebenen Abgabestelle nähert, erhält der Antrieb des Quergurtförderers bei Erreichen der Abgabestelle ein Einschaltsignal und wird mit einer Spannungs- bzw. Stromquelle verbunden, so daß das betreffende Stückgutteil bei unverminderter Sortergeschwindigkeit, die heutzutage bereits relativ hoch sein kann, von dem Quergurtförderer quer zur Sorter-Förderrichtung seitlich in Richtung auf die Abgabestelle abgefördert wird, und dabei (ggf. über eine Rutsche) von einem Aufnahmemittel (bei dem es sich um einen Behälter oder ebenfalls um einen Förderer handeln kann) aufgenommen wird, dessen Aufnahmefläche sich ggf./bevorzugt i.w. auf dem gleichen Niveau wie die Oberseite des Obertrums des Querförderers befindet.

Die Elektromotoren der Querförderer des Sorters erhalten dabei ihre elektrische (Antriebs-) Energie über elektrische Leitungen, die über Schleifkontakte des betreffenden Förderelementes mit einer stationären Stromschiene verbunden sind, welche an eine elektrische Spannungsquelle angeschlossen ist, wie dieses bspw. auch von S- bzw. U-Bahnen bekannt ist, und regelmäßig dann eingesetzt wird, wenn ein mit einem elektrischen Antrieb versehenes, bewegliches Teil" von einer stationären Spannungsquelle mit elektrischer Energie versorgt werden muß.

Ein erheblicher Nachteil dieses bekannten Sorters liegt darin, daß sein Schleifleitungssystem einem erheblichen Verschleiß unterliegt, da die Stromabnehmer sich während des Sorterbetriebes ständig unter erheblichen Andruck an die Stromschiene relativ zu dieser bewegen, und da es dabei zwangslaufig zu einer erheblichen Reibung unter relativ großer Erwärmung kommt. Der bekannte gattungsgemäße Sorter ist daher insb. im Hinblick auf die erforderlichen Wartungs- und Reparaturarbeiten, aber auch schon im Hinblick auf den Installationsaufwand sehr teuer. Es kommt hinzu, daß die Wartungs- und Reparaturarbeiten jeweils einen Betriebsausfall des Sorters und damit der gesamten Verteilanlage zur Folge haben, was bspw. schon bei Sortieranlagen der Post oder in Versandhäusen höchst mißlich ist, und bspw. für Gepäck-Verteil- bzw. Sortieranlagen auf Flughäfen völlig unakzeptabel ist.

Um diese und weitere Nachteile zu vermeiden, ist auch bereits vorgeschlagen worden, gattungsähnliche Sorter mit Reibrädern zu versehen, die beim Betrieb des Sorters an den Schienen in Drehung versetzt werden, und mit Dynamos im Eingriff sind, welche die für den Antrieb der Quergurtförderer erforderliche elektrische Energie erzeugen. Bei diesen Sortern entfällt zwar der erhebliche Verschleiß zwischen den Stromabnehmern und der Stromschiene (und die hierdurch verursachte Verschmutzung), doch hat sich herausgestellt, daß es dabei zwischen den Reibrädern und den Stütz- und Führungsschienen einerseits sowie den Dynamos andererseits aufgrund des unvermeintlichen Schlupfes zu erheblichen Verschleißerscheinungen kommt, die nicht nur ebenfalls zu erheblichen Verschmutzungen führen, sondern dadurch auch häufige Wartungs- und Reparaturarbeiten erforderlich machen. Dieses schon deshalb, weil der Abrieb sich regelmäßig reibmindernd auf den Kontakt zwischen Reibrädern und Schienen bzw. den Dynamos auswirkt, so daß die von den Dynamos erzeugbare elektrische Energie schließlich vom Förderelement zu Förderelement schwankt und in Einzelfällen zu gering ist, um die erforderliche elektrische Energie zum Antrieb eines Antriebes für einen Quergurtfördererbereitzustellen.

Aus der eingangs bereits benannten US-A-5,701,992 ist ein gattungsgemäßer Sorter bekannt, mit dem verhindert werden soll, daß es aufgrund des magnetischen Flusses zu elektrostatischen Aufladungen der auf elektrisch nicht-leitenden Laufrollen abgestützten Förderelemente und damit zu erheblichen elektrischen Schlägen kommen kann, wenn das Bedienungspersonal oder sonstige Dritte mit dem Sorter in Kontakt kommen. Diese Gefahr ist bei diesem bekannten Sorter besonders groß, weil sein Induktionssteg als gesonderte Doppelschiene ausgebildet ist, welche in ein zu einer Seite des Sorters hin offenes, von außen her zugängliches E-förmiges Ferritteil greift.

Jedem Förderelement ist eine Steuereinrichtung mit einem optischen Steuerelement zugeordnet, mittels dessen jeweils dem Antriebssorter des Quergurtförderers Steuersignale zu übermitteln sind.

Der vorliegenden Erfindung liegt die Aufgabe zugrunde den Gliederförderer (Sorter) der eingangs beschriebenen Gattung unter Aufrechterhaltung nicht nür möglichst sämtlicher Vorteile eines Sorters, wie er bspw. aus dem Aufsatz "Hochleistungs-Sortieranlanage für kurze Lieferzeiten eines Distributionszentrums in Como" (s.d. Bild 1) in der Zeitschrift "Logistik im Unternehmen 12 (1998), Nr. 9 - September, der Fa. Sandvik bekannt ist, sondern auch der Vorteile des aus der US-A-5 701 992 bekannten Sorters im Sinne einer konstrüktionen Vereinfachüng mit zugleich erheblich gesteigerter Sicherheit (insbesondere gegen elektrische Schläge) zu verbessern, wobei außerdem die Möglichkeit geschaffen werden soll, eine Abgabestelle ggf. variabel anzusteuern, und zwar so, daß ein Förderelement sein Stückgutteil (etwas) später (oder früher) abgibt als dasjenige Förderelement, welches an der selben Abgabestelle zuvor ein Stückgutteil abgegeben hat, so daß bei entsprechender Datenerfassung und Steuerung an einer bzw. jeder Abgabestelle (bspw. in einem dort angeordneten Aufnahmebehälter) eine Hintereinanderanordnung der abgegebenen Stückgutteile und damit eine höchst effiziente Abgabe (insb. von relativ kleinen Stückgutteilen) zu bewirken ist, wobei der erfindungsgemäße Sorter darüberhinaus auch feuchtigkeitsunempfindlich sein soll, so daß er ggf. auch als Gepäckförderer zwischen zwei Terminals auf einem Flughafen od.dgl. problemlos selbst dann eingesetzt werden kann, wenn die Förderstrecke teilweise ungeschützt und Witterungseinflüssen ausgesetzt ist.

Die Lösung dieser Aufgabe erfolgt durch die kennzeichnenden Merkmale des Anspruches 1. Bevorzugte Ausgestaltungen der vorliegenden Erfindung sind in Unteransprüchen beschrieben.

Die Erfindung wird nachstehend an Ausführungsbeispielen unter Bezugnahme auf eine Zeichnung weiter erläutert, wobei die nachstehende Figurenbeschreibung ersichtlich auch nicht spezielle Teile enthält, die sich ganz allgemein auf die vorliegende Erfindung und nicht etwa nur auf die in der Zeichnung dargestellten Ausführungsbeispiele beziehen. In der der besseren Deutlichkeit halber überwiegend stark schematisierten Zeichnung zeigt:
- Fig. 1: Eine Draufsicht auf einen linearen Abschnitt (4 Förderelemente) eines erfindungsgemäßen Sorters in Richtung des Pfeiles I in Fig. 2 gesehen;
- Fig. 2: eine Seitenansicht der Darstellung gem. Fig. 1 in Richtung des Pfeiles II in Fig. 1 gesehen;
- Fig. 3: eine (gegenüber den Figuren 1 und 2 vergrößerte) Draufsicht auf ein Förderelement in Richtung des Pfeiles III in Fig. 6 gesehen;
- Fig. 3a: die Darstellung gem. Fig. 3 in einem vergrößerten Maßstab;

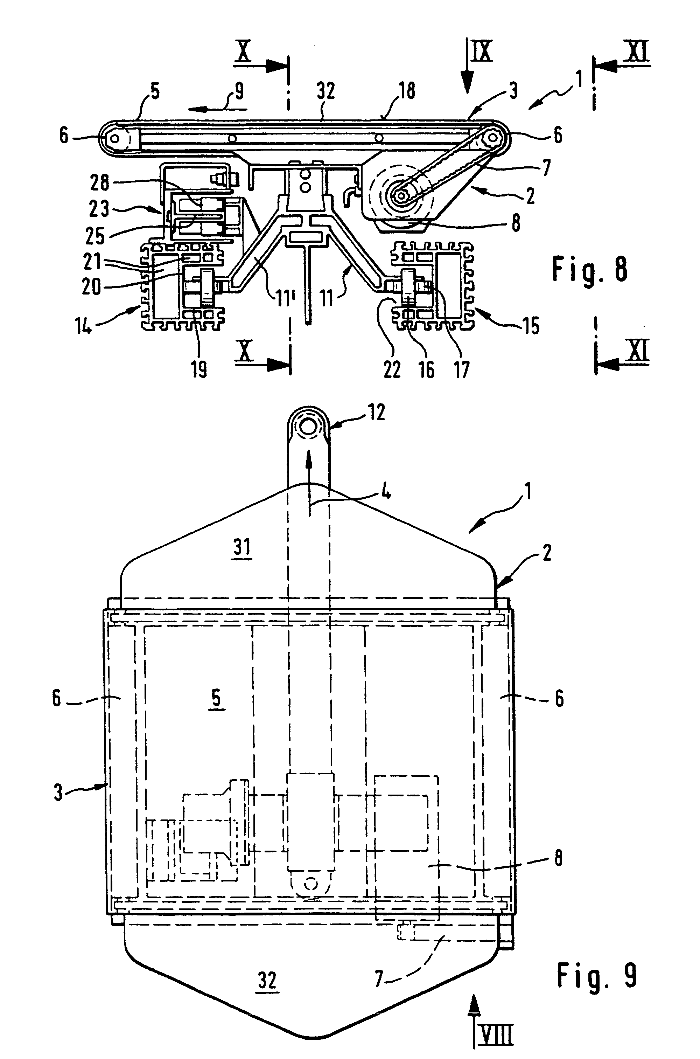

- Fig. 4: eine Darstellung gem. Fig. 3, in welcher ein Teil des Fördergurtes des Quergurtförderers sowie ein Teil einer an diesen in Förderrichtung anschließenden Tragplatte weggeschnitten sind, also eine Draufsicht in Richtung des Pfeiles IV in Fig. 7;
- Fig. 5: eine Seitenansicht der Darstellung in Fig. 4 in Richtung des Pfeiles V in Fig. 4 gesehen;
- Fig. 6: eine stirnseitige Seitenansicht in Förderrichtung des Sorters in Richtung des Pfeiles VI in Fig. 3 gesehen;
- Fig. 6a: die Darstellung gem. Fig. 6 in einer vergrößerten Darstellung (gem. dem Maßstab in Fig. 3a);
- Fig. 7: eine Fig. 6 entsprechende Darstellung, in welcher im rechten oberen Teil ein Teil des Förderelement-Gehäuses weggeschnitten ist;
- Fig. 8: eine weniger schematische Darstellung gem. Fig. 6 bzw. Fig. 7 in Richtung des Pfeiles VIII in Fig. 9 gesehen;
- Fig. 9: eine im wesentlichen Fig. 3 entsprechende Darstellung (ohne Schienen) in einer Darstellungsweise gem. Fig. 8 in Richtung des Pfeiles IX in Fig. 8 gesehen;

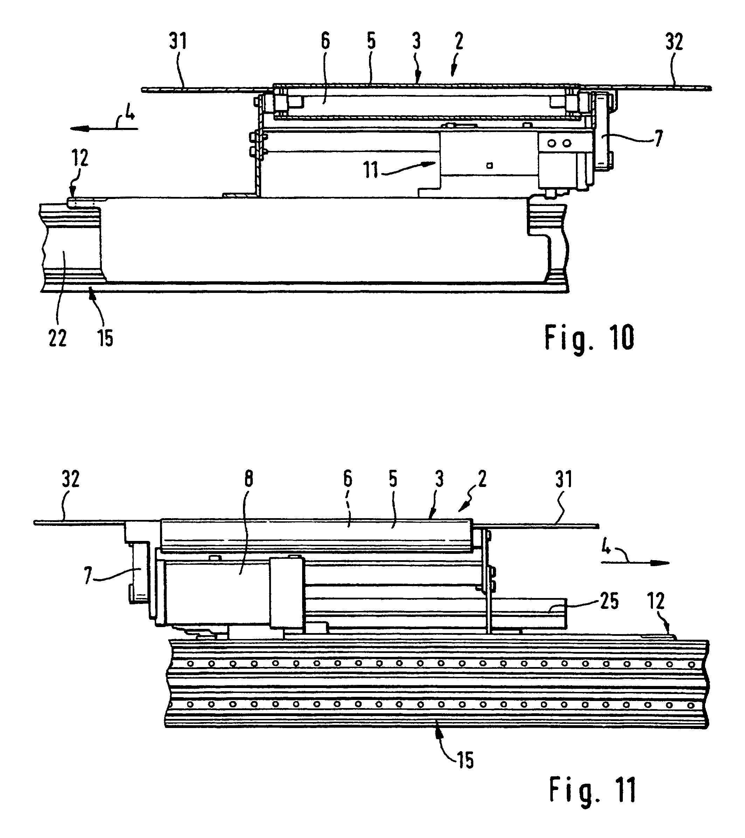

- Fig. 10: eine Seitenansicht der Darstellung gem. Fig. 8 in Richtung der Schnittlinie X-X in Fig. 8 gesehen; und
- Fig. 11: eine Fig. 10 entsprechende Darstellung in Richtung XI-XI in Fig. 8 gesehen.

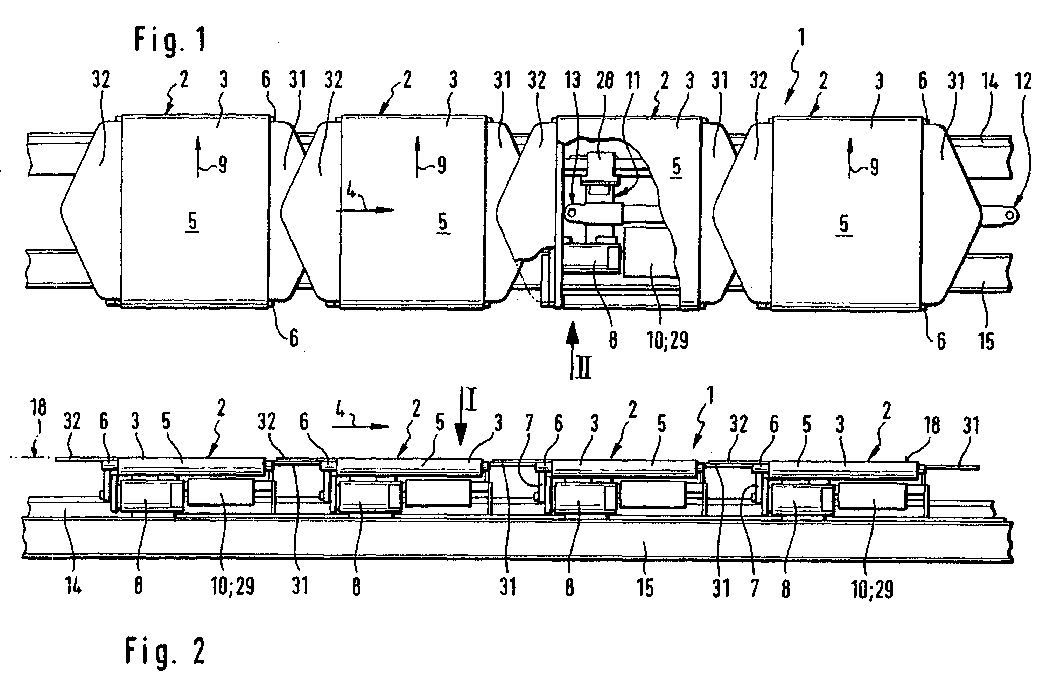

Die Figuren 1 und 2 zeigen jeweils einen kurzen, linearen Abschnitt der Förderbahn eines im ganzen mit 1 bezeichneten Gliederförderers, der vor- und nachstehend auch als Sorter bezeichnet ist, zum Sortieren von in der Zeichnung der besseren Übersicht halber nicht dargestellten Stückgutteilen, die an mehreren (in der Zeichnung ebenfalls nicht dargestellten) Aufgabestellen jeweils mittels einer bekannten Aufgabevorrichtung nach dortiger Vereinzeilung jeweils einzeln auf einen sich der betreffenden Aufgabestelle nähernden freien Aufgabeplatz des Sorters 1 aufzugeben sind, und die jeweils an einer vorgegebenen (in der Zeichnung ebenfalls nicht dargestellten) Abgabestelle (vorbestimmt aus einer Vielzahl von Abgabestellen)) wieder von dem Sorter 1 abzugeben sind. Dabei wird jeder von einem Förderelement 2 bzw. im wesentlichen von dessen Quergurtförderer 3 gebildeter Förderplatz höchstens von einem einzelnen Stückgutteil eingenommen, wobei es jedoch auch möglich ist, daß ein längeres Stückgutteil von zwei Förderlementen 2 aufgenommen und während der Förderung abgestützt wird.

Die Tragfläche weist außerdem noch zwei i.w. dreiecksförmige Stützabschnitte 31 und 32 auf, die fest an jedem Förderelement 2 angeordnet sind.

Der Sorter 1 besitzt eine Vielzahl von gleich ausgebildeten, in Förderrichtung 4 des Sorters 1 hintereinander angeordneten, einen in sich geschlossenen, endlosen Förderstrang bildenden, gelenkig miteinander verbundenen Förderelementen 2, jeweils an ihrem oberen Ende einen Quergurtförderer 3 zum Aufnehmen bzw. Abstützen und späteren Abgeben eines an einer Aufgabestelle aufgegebenen und an einer Abgabestelle abzugebenden Stückgutteils aufweisen.

Jeder Quergurtföderer 3 besitzt einen endlosen Fördergurt 5, der um zwei mit gegenseitigem Abstand angeordnete, in Förderrichtung 4 des Sorters 1 verlaufende Rollen 6 umgelenkt ist, von denen die eine Rolle 6 über einen Ketten- oder Zahnriementrieb 7 von einem an dem jeweiligen Förderelement 2 angeordneten Elektromotor 8 so anzutreiben ist, daß das Obertrum des Fördergurtes 5 des betreffenden Quergurtförderers 3 sich gem. den Pfeilen 9 nach Aktivierung des Elektromotors 8 durch eine intelligente" Steuereinrichtung 10 bzw. 29 gesteuert zur vorgesehenen Abgabestelle bzw. Abgabeseite hin bewegt.

Der Quergurtförderer 3 jedes Förderelementes 2 ist jeweils an einer im ganzen mit 11 bezeichneten Stützeinrichtung befestigt, welche unter Bildung einer aus sämtlichen Stützeinrichtungen 11 bestehenden Gliederkette an ihrem vorderen Endabschnitt 12 und ihrem hinteren Endabschnitt 13 gelenkig mit der Stützeinrichtung 11 des vorhergehenden bzw. nachfolgenden Förderelementes 2 verbunden ist, und die an ihrem dem Quergurtförderer 3 abgekehrten, unteren Endabschnitt an zwei parallelen, mit gegenseitigem Abstand angeordneten, die vorgegebene Förderbahn bestimmenden (Stütz- und Führungs-)Schienen 14 und 15 mittels Laufrollen 16 und 17 abgestützt und geführt sind, wobei die Laufrollen 16 um parallel zur Förderebene 18 des Sorters 1 verlaufende Achsen und die Laufrollen 17 um senkrecht zur Förderebene 18 verlaufende Drehachsen drehbar an der betreffenden Stützeinrichtung 11 gelagert sind und während des Betriebes umlaufen. Dabei laufen die Laufrollen 16, 17 an in Förderrichtung 4 des Sorters 1 dem Verlauf der Förderbahn folgenden, endlosen bzw. in sich geschlossenen (Lauf- und Stütz-)Stegen 19 und 20 der beiden Schienen 14 bzw. 15 entlang der Förderbahn um, wobei die Stege 19, 20 jeweils an der der anderen Schiene zugekehrten (Innen-)Seite einer Schiene 14 bzw. 15 angeordnet bzw. ausgebildet sind.

Nicht zuletzt aus Stabilitäts- bzw. Festigkeitsgründen sind die beiden Schienen 14, 15 als kastenförmige Strangprofile aus einer hinreichend festen Leichtmetallegierung hergestellt, deren Festigkeit durch die geschaffenen Kammern 21 bzw. die die Kammern 21 bildenden Wandungen und das auf diese Weise geschaffene Widerstandsmoment erhöht ist. Für die eigentliche Stütz- und Laufflächenfunktion werden ersichtlich lediglich die nach innen offenen Kammern 22 der Schienen verwendet, wobei insb. die jeweils außen liegende große Kammer 21 einer Schiene 14 bzw. 15 auch zur Aufnahme einer Einrichtung 23 zur berührungsfreien Energieversorgung bzw. -übertragung dienen könnte, die jedoch in den dargestellten Ausführungsbeispielen beispielhaft oberhalb der Schiene 14 angeordnet ist und nachstehend im einzelnen beschrieben wird, wobei zur Beschreibung der vorliegenden Erfindung diese Ausgestaltungsmöglichkeit gewählt worden ist, weil sie zeichnerisch deutlicher ist/wird als eine extrem kompakte und daher zu bevorzugende Ausgestaltung, bei welcher die Einrichtung 23 zur Energieversorgung bzw. -übertragung in einen Schenkel 11' der Stützeinrichtung 11 integriert ist und von dort aus in die äußere Kammer 21 der Schiene 14 ragt.

Jede Stützeinrichtung 11 weist eine schlitzförmige Ausnehmung 24 auf, in welche sich ein als Kragarm ausgebildeter Lauf- und Stützsteg 19 bzw. 20 der Schiene 14 (bzw. der anderen Schiene 15) erstrecken könnte, in welche aber bei der vorliegenden Ausgestaltung ein zu den Stegen 19 paralleler, gesonderter, integraler flanschartiger Steg der Laufschiene 14 hineinragt, der nachstehend als Induktionssteg 25 bezeichnet ist, wobei sich dieser so in die Schiene 14 erstreckt, daß er mit Abstand zu der Schlitzwandung 26 verläuft, welche die Innenseite schlitzförmigen Ausnehmung 24 bildet.

Der sich berührungslos in die schlitzförmige Ausnehmung 24 der Stützeinrichtung 11 erstrekkende Induktionssteg 25 ist mit einem einen Primärkreis bildenden, an eine Wechselspannungsquelle oder eine Wechselstromquelle anschließbaren bzw. angeschlossenen elektrischen Leiter 27 versehen.

Der die schlitzförmige Ausnehmung 24 bildende Abschnitt 28 der Stützeinrichtung 11, der in der Art eines seitlichen Fortsatzes an deren Schenkel 11' angeordnet ist, ist ferritisch ausgebildet und bildet einen Kern für eine in der Zeichnung nicht dargestellte Sekundärwicklung, welche mit dem Primärkreis 27 magnetisch gekoppelt ist.

Dem zum steuerbaren Antrieb des Quergurtförderers 3 vorgesehenen Elektromotor 8 ist eine individuelle Steuereinrichtung 29 zugeordnet, welcher über eine in der Zeichnung nicht im einzelnen dargestellte Steuerleitung Steuerbefehle bzw. -signale zuzuleiten sind. Die Steuerleitung ist zwecks Informationsübertragung entlang der Förderbahn verlegt. Über sie können von einer bevorzugt einen Rechner aufweisenden, zentralen Steuereinrichtung Steuerbefehle bzw. -signale an die Förderelemente 2 bzw. deren Steuereinrichtung 29 erteilt bzw. übertragen werden.

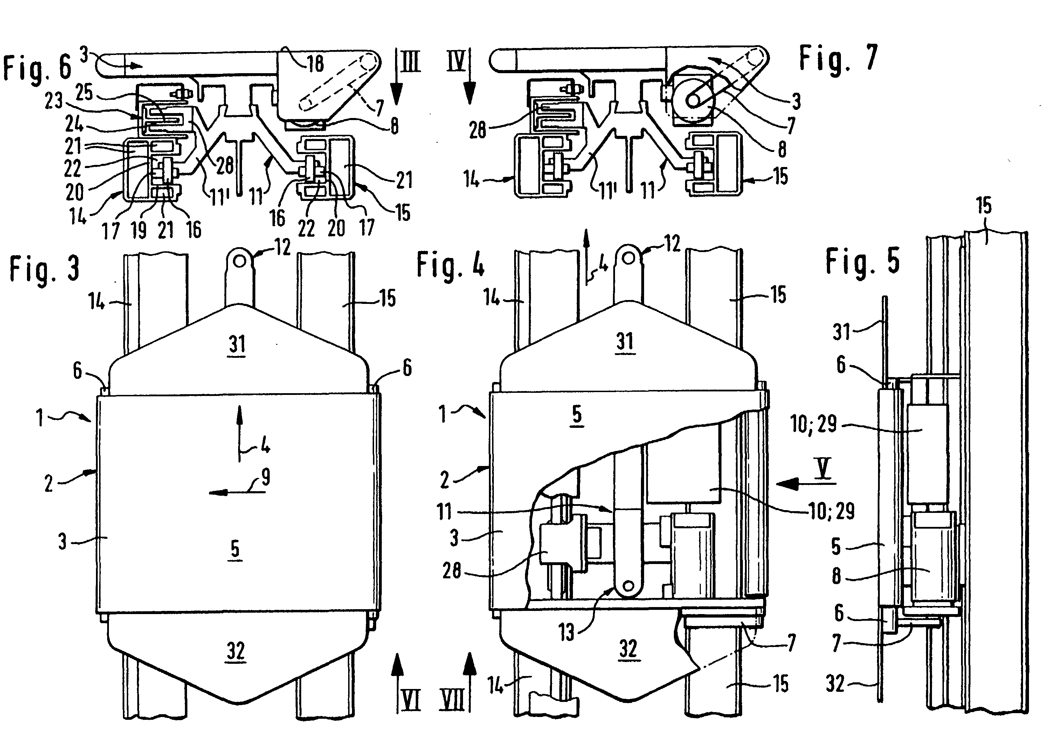

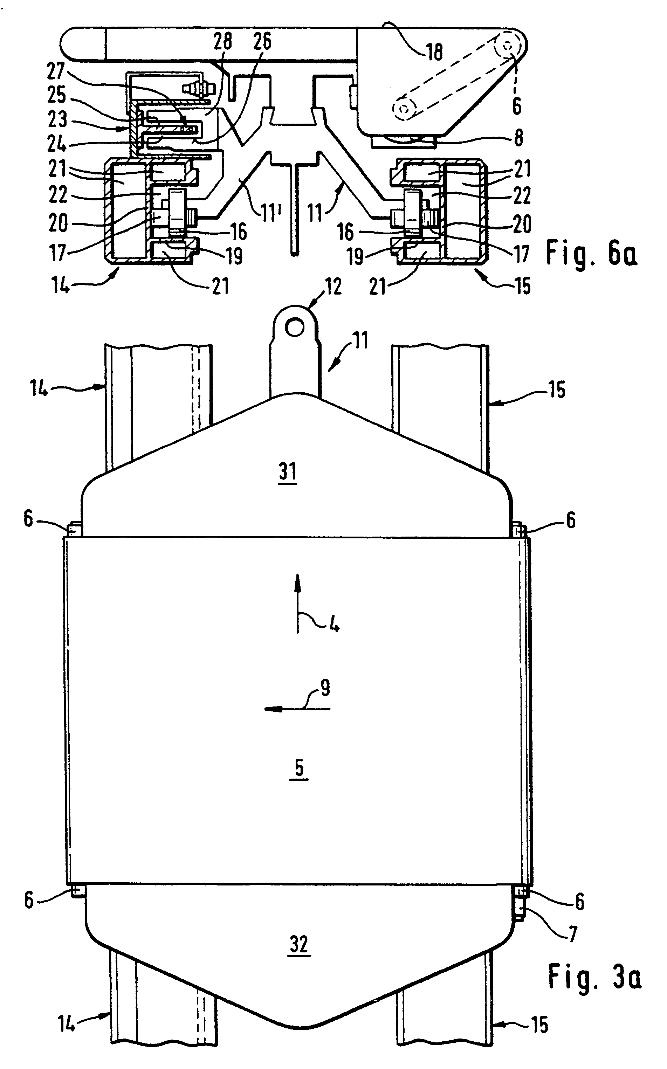

Wie insb. aus Fig. 6a erkennbar ist, ist die schlitzförmige Ausnehmung 24 im wesentlichen U-förmig ausgebildet, und der Induktionssteg 25 als Flansch mit konstanter Dicke, wobei der Abstand zwischen dem Induktionssteg 25 und der Schlitzwandung 26, welche den Induktionssteg 25 nahezu kastenförmig umgibt, umlaufend konstant und so klein ist, daß gerade mit Sicherheit ein Kontakt zwischen dem Induktionssteg 25 und der Schlitzwandung 26 vermieden wird. Bei den dargestellten Ausführungsbeispielen ist die schlitzförmige Ausnehmung 24 jedes Förderelementes 2 jeweils zu einer Seite des Sorters 1 hin offen. Sie könnte jedoch selbstverständlich auch nach oben, unten und ggf. auch sogar nach innen offen sein, wobei letztere Ausbildung kontruktiv schwierig und daher unzweckmäßig ist.

Es noch nachgetragen, daß die entlang der Förderbahn verlegte Steuerleitung zweckmäßigerweise an einer Schiene 14 bzw. 15 verlegt ist, daß sie selbstverständlich aber auch ggf. separat von dieser verlaufen könnte.

Die an den Förderelementen 2 angeordneten und demgem. mit diesen verfahrbaren singulären Steuereinrichtungen 29 übertragen jeweils u.a. Informationen über die aktuelle Momentanposition des betreffenden Förderelementes 2 und/oder dessen Beladung etc. an die nicht dargestellte zentrale Steuereinrichtung. Dabei werden die von einer singulären Steuereinrichtung 29 an die zentrale Steuereinrichtung übertragenen Informationen bzw. Daten wenigstens teilweise auch an andere singuläre Steuereinrichtungen 29 übertragen, die an anderen (weiteren) Förderelementen 2 vorhanden sind, und werden von diesen nicht nur empfangen, sondern auch für einen optimalen Betrieb des Sorters 1 verwertet. Aus diesem Grunde sind die singulären Steuereinrichtungen 29 jeweils mit einem Rechner versehen, dessen Software es u.a. ermöglicht, jede Abgabestelle variabel anzusteuern, so daß - insb. bei relativ kleinen Stückgutteilen die angestrebte präzise und gezielte Abgabe an der jeweils vorgesehenen Abgabestelle (die so breit sein muß wie das breiteste bzw. längste Stückgutteil) mit einem bestimmten Versatz in Förderrichtung, und zwar so erfolgen kann, daß die an einer Abgabestelle abgegebenen Stückgutteile an der betreffenden Abgabestelle wie auf einer Perlenschnur aufgereiht" hintereinander zur Ablage kommen, wenn dieses unter den jeweils gegebenen Verhältnissen zweckmäßig und daher wünschenswert ist.

Es sei noch darauf verwiesen, daß bei dem erfindungsgemäßen Sorter nicht zwangsläufig jedes Förderelement 2 mit einer Einrichtung 23 zur Energieversorgung bzw. -übertragung versehen zu sein braucht, sondern daß bspw. nur jedes dritte, vierte oder fünfte Förderelement 2 entsprechend ausgebildet werden kann, und daß die dazwischen liegenden Förderelemente 2 dann jeweils mit einem mit einer Einrichtung 23 versehenen Förderelement über elektrische Leitungen verbunden sein können. Im Verlaufe der Entwicklung hat sich jedoch herausgestellt, daß es unter verschiedenen Gesichtspunkten höchst zweckmäßig und daher zu bevorzugen ist, sämtliche Förderelemente 2 gleich auszubilden, so daß sich eine modulartige Ausbildung ergibt, also ein Gliederförderer 1, dessen Förderelemente 2 beliebig gegeneinander ausgetauscht werden können, was ersichtlich diverse Vorteile hat.

Der den Primärkreis der Energieübertragung bildende elektrische Leiter 27 kann in bevorzugter Ausgestaltung der vorliegenden Erfindung sowohl mit elektrischer Energie zum Antrieb der Elektromotoren 8 als auch mit steuerungsrelevanten elektrischen Informationen beaufschlagt werden, wobei die singulären Steuereinrichtungen 29 dann ein Trennmittel bzw. eine Trenneinrichtung, wie z.B. ein Filter bzw. eine Filtereinrichtung aufweisen, mittels dessen bzw. derer die steuerungsrelevanten Informationen von der übertragenden elektrischen Energie zu trennen sind.

Dabei ist zweckmäßigerweise dem Primärkreis 27 der Energieübertragung eine z.B. ebenfalls als Filtereinrichtung ausgebildete Kopplungseinrichtung zugeordnet, mittels welcher die zu übertragende elektrische Energie vor Übertragung auf den Sekundärkreis bzw. die einzelnen Sekundärkreise mit den steuerungsrelevanten Informationen in Form elektrischer Signale zu vereinen ist.

Es sei nochmals ausdrücklich darauf verwiesen, daß die Wicklungen, die als Ferritkerne wirksamen ferritischen Abschnitte 28 der Einrichtungen 23 bzw. des Induktionssteges 25 jeweils umgeben.

Im übrigen wird die berührungsfreie Energieübertragung, die auf induktive Weise durch magnetische Kopplung erfolgt, bevorzugt mit einer höheren Frequenz betrieben, die im sog. Mittelfrequenzbereich liegt, wobei die Ausführungsbeispiele mit 25 kHz arbeiten.

Es ist ohne weiteres ersichtlich, daß mit dem erfindungsgemäßen, als Gliederförderer ausgebildeten Sorter 1 sämtliche Nachteile des relevanten Stand der Technik vermieden und unter Aufrechterhaltung sämtlicher Vorteile des nächstkommenden Standes der Technik auch noch weitere Vorteile zu erzielen sind. Es können also mit dem erfindungsgemäßen Sorter auch höchst stoßempfindliche Stückgutteile extrem schonend aufgenommen, gefördert und vor allem auch wieder von dem Sorter reibungsfrei auf gleiches Höhenniveau an der betreffenden Abgabestellen abgegeben werden, wobei wegen eines Fehlens von Reibwiderständen jegliche Gefahr eines Verdrehens oder/und Überschlagens bei der Abgabe völlig ausgeschlossen ist.

Weiterhin ist nicht nur eine zielgenaue, schonende Präzisionsabgabe möglich, sondern dabei auch eine entsprechend präzise Abgabe mit variablem Abgabepunkt an einer Abgabestelle.

Da im Bereich der Energieübertragung bzw. -erzeugung keine Relativbewegung unter Reibung (und hoher Temperatur) erfolgt, entfällt sowohl der im Stand der Technik vorhandene Verschleiß als auch die damit einhergehende Verschmutzung, und der erfingungsgemäße Sorter ist darüber hinaus so feuchtigkeitsunempfindlich, daß er sogar unter Wasser betrieben werden könnte.

Obwohl die Antriebe der Quergurtförderer insb. bei größeren Sortern und relativ schwerer Ladung eine erhebliche Antriebsleistung erfordern, weil jeweils der sog. Losbrechwiderstand eines Quergurtförderers aus dem Stillstand erheblich ist und wegen der relativ geringen Breite der Abgabestelle sehr kurzfristig zu überwinden ist, damit der (die) betreffende(n) Quergurtförderer sehr schnell auf die Höchstgeschwindigkeit kommt (kommen), und das betreffende Stückgutteil an der betreffenden Abgabestelle genau abgeben werden kann, hat sich überraschenderweise herausgestellt, daß auch für derartige Groß-Sorter die erforderliche Antriebsleistung in der geschilderten Weise von der hierfür ausgewählten Schiene 14 bzw. 15 zu übertragen ist, insb. wenn dabei die vorstehend beschriebenen bevorzugten Ausgestaltungen realisiert werden.

Ganz allgemein sei noch nachgetragen, daß die berührungsfrei übertragende elektrische Leistung - nach dem Trennen von den bevorzugt gleichzeitig mitübertragenen Informationen, aus denen in singulären Steuereinrichtungen 29 die erforderlichen Steuersignale berechnet und ausgelöst werden - in den singulären Steuereinrichtungen 29 der Förderelemente 2 jeweils in geeigneter Weise so aufbereitet werden, daß für die Elektromotoren 8 die erforderliche elektrische Energie in der jeweils geeigneten Form zur Verfügung steht. Bei den in der Zeichnung dargestellten Ausführungsbeispielen wird die als elektrische Wechselenergie übertragene Spannung gleichgerichtet, da die Elektromotoren 8 als Gleichstrommotoren ausgebildet sind.

Nicht zuletzt ist der erfindungsgem. Sorter gegenüber dem nächststehenden Stand der Technik erheblich preiswerter. Da auch die Wartungs- und Reparaturkosten erheblich geringer sind, sind die sich aus den Investitions- und Bertriebskosten ergebenden Gesamtkosten erheblich geringer als im Stand der Technik, und es sind - wie bereits ausgeführt - in der erfindungsgem. Ausbildung überraschenderweise auch sogar Sorter zu betreiben, die längere Förderstrecken aufweisen, wie dieses bspw. zwischen den Terminals eines Flughafens bei der Gepäckförderung der Fall sein kann, wie dieses bisher für eine induktive, berührungsfreie Energieübertragung bei solchen Fördersystemen nicht einmal in Erwägung gezogen worden ist, sondern (bspw. in der PCT-GB92/00220) allenfalls für Einzelfahrzeuge", wie die Laufkatze eines Hebezeuges, die Kabine einer Einschienenhängebahn oder einzelne Roboter, die nach Zurücklegung einer Wegstrecke bspw. um eine Achse drehen müssen, um an dieser Stelle tätig zu werden, nicht aber für Transportsysteme mit einer Vielzahl von (Förder)-Elementen, von denen ggf. wiederum eine Vielzahl gleichzeitig betätigt und demgem. mit elektrischer Energie versorgt werden muß.

## Patentansprüche

1. Gliederförderer (1) (Sorter) zum Sortieren von Stückgutteilen, die an wenigstens einer Aufgabestelle auf den Sorter (1) aufzugeben und jeweils an einer vorgegebenen Abgabestelle von mehreren Abgabestellen wieder von dem Sorter (1) abzugeben sind, mit einer Vielzahl von in Förderrichtung (4) hintereinander angeordneten, gelenkig miteinander verbundenen, einen in sich geschlossenen, endlosen Förderstrang bildenden Förderelementen (2) zur jeweiligen Aufnahme eines Stückgutteils, die jeweils an ihrem oberen Ende einen Quergurtförderer (3) zum Aufnehmen und späteren Abgeben eines Stückgutteils aufweisen, dessen endloser Fördergurt (5) um zwei mit gegenseitigem Abstand angeordnete, in Förderrichtung (4) des Sorters (1) verlaufende Rollen (6) umgelenkt ist, von denen die eine von einem an dem betreffenden bzw. benachbarten Förderelement (2) angeordneten, von einer individuellen Steuereinrichtung (10; 29) aktivierbaren bzw. deaktivierbaren Elektromotor (8) so anzutreiben ist, daß das Obertrum des Quergurtförderers (3) sich zur vorgegebenen Abgabestelle hin bewegt, wobei der Quergurtförderer (3) eines Förderelementes (2) jeweils an einer Stützeinrichtung (11) befestigt ist, welche unter Bildung einer aus sämtlichen Stützeinrichtungen (11) bestehenden Gliederkette an ihrem vorderen und hinteren Endabschnitt (12 bzw. 13) gelenkig mit der Stützeinrichtung (11) des vorhergehenden bzw. nachfolgenden Förderelementes (2) verbunden ist, und die an ihrem dem Quergurtförderer (3) abgekehrten, unteren Endabschnitt an zwei parallelen, mit gegenseitigem Abstand angeordneten, die vorgegebene Förderbahn bestimmenden (Stütz- und Führungs-)Schienen (14, 15) mittels Laufrollen (16, 17) abgestützt und geführt ist, welche an - in Förderrichtung (4) dem Verlauf der Förderbahn folgenden - endlosen, in sich geschlossenen Schienen (14, 15) entlang der Förderbahn umlaufen, wobei die Stützeinrichtungen (11) der Förderelemente (2) jeweils wenigstens eine von einem zumindest teilweise ferritisch ausgebildeten und mit einer (Sekundär-)Wicklung versehenen Abschnitt (28) der Stützeinrichtung (11) gebildete schlitzförmige Ausnehmung (24) aufweisen, in welche sich ein parallel zu den Schienen (14, 15) verlaufender Induktionssteg (25) berührungsfrei erstreckt, der mit einem einen Primärkreis (27) bildenden, mit der Ausnehmung (24) magnetisch gekoppelten, an eine Wechselspannungs- oder eine Wechselstromquelle anschließbaren elektrischen Leiter (27) versehen ist, und wobei zwecks Informationsübertragung Steuermittel vorhanden sind, über welche Steuerbefehle bzw. -signale auf/an die Förderelemente (2) zu übertragen/zu erteilen sind, **dadurch gekennzeichnet**, daßdie Schienen (14, 15) an ihrer der anderen Schiene zugekehrten Innenseite endlose, in sich geschlossene Stege (19, 20, 25) aufweisen, entlang welcher die Laufrollen (16, 17) umlaufen; daß der Induktionssteg (25) von einem flanschartigen Steg (z.B. 25, 19) der einen Schiene (z.B. 14) gebildet ist; und daß das Steuermittel zur Übertragung von Steuerbefehlen bzw. -signalen auf die Förderelemente (2) eine an - vorzugsweise in - einer Schiene (14) entlang der Förderbahn verlegte Steuerleitung ist, über welche den Förderelementen (2) von einer einen Rechner aufweisenden zentralen Steuereinheit Steuerbefehle bzw. -signale zu übennitteln sind, wobei der den Primärkreisder berührungslosen Energieübertragung bildende elektrische Leiter (27) in dem Induktionssteg (25) angeordnet ist, und sowohl mit elektrischer Energie zum Antrieb der Elektromotoren (8) für die Quergurtförderer (3) als auch mit steurungsrelevanten elektrischen Informationssignalen zu beaufschlagen ist, und wobei die singulären Steuereinrichtungen (29) jeweils eine Trenneinrichtung wie eine Filtereinrichtung aufweisen, mittels welcher die steuerungsrelevanten Informationssignale von der übertragenden Antriebsenergie zu trennen sind.

2. Gliederförderer nach Anspruch 1, **dadurch gekennzeichnet, daß** jedes Förderelement (2) eine schlitzförmige Ausnehmung (24) aufweist (n = 1).

3. Gliederförderer nach Anspruch 1 oder 2,**dadurch gekennzeichnet, daß** der den Induktionssteg (25) bildende, flanschartige Steg (25) der Schiene (14) mit einer im wesentlichen konstanten Dicke ausgebildet ist.

4. Gliederförderer nach einem oder mehreren der vorhergehenden Ansprüche, **dadurch gekennzeichnet, daß** die schlitzförmigen Ausnehmungen (24) im wesentlichen U-förmig ausgebildet sind.

5. Gliederförderer nach einem oder mehreren der vorhergehenden Ansprüche, **dadurch gekennzeichnet, daß** der Abstand zwischen dem den Induktionssteg (25) bildenden Steg (25) und der inneren Schlitzwandung (26) der Ausnehmungen (24) jeweils im wesentlichen konstant ist.

6. Gliederförderer nach Anspruch 5, **dadurch gekennzeichnet, daß** der Abstand höchstens einige Millimeter beträgt, und so ausgebildet ist, daß es während des Betriebes nicht zu einer Berührung des Steges (25) mit den Schlitzwandungen (26) kommen kann.

7. Gliederförderer nach einem oder mehreren der vorhergehenden Ansprüche, **dadurch gekennzeichnet, daß** die schlitzförmige Ausnehmung (24) eines Förderelementes (2) jeweils zu einer Seite des Sorters (1) hin offen ist.

8. Gliederförderer nach einem oder mehreren der vorhergehenden Ansprüche, **dadurch gekennzeichnet, daß** an jedem Förderelement (2) eine singuläre Steuereinrichtung (29) für den Elektromotor (8) des betreffenden Quergurtförderers (3) vorgesehen ist, mittels welcher jeweils u.a. Informationen über die aktuelle Momentanposition des Förderelementes (2), sowie dessen Beladung an die zentrale Steuereinrichtung zu übertragen sind.

9. Gliederförderer nach einem oder mehreren der vorhergehenden Ansprüche, insb. nach Anspruch 8, **dadurch gekennzeichnet, daß** von einer singulären Steuereinrichtung (29) an die zentrale Steuereinrichtung übertragene Informationen/Daten wenigstens teilweise auch an wenigstens eine singuläre Steuereinrichtung (29) eines anderen Förderelementes (2) zu übertragen sowie von dieser zu empfangen und zu verarbeiten sind.

10. Gliederförderer nach einem oder mehreren der vorhergehenden Ansprüche, **dadurch gekennzeichnet, daß** dem Primärkreis (27) der berührungslosen Energieübertragung eine z.B. als Filtereinrichtung ausgebildete Kopplungseinrichtung zugeordnet ist, mittels welcher die zu übertragende elektrische Energie vor Übertragung auf den Sekundärkreis/die Sekundärkreise mit den steuerungsrelevanten elektrischen Informationssignalen zu vereinen bzw. diesen zu überlagern ist.

11. Gliederförderer nach einem oder mehreren der vorhergehenden Ansprüche, **dadurch gekennzeichnet, daß** die Wicklungen die als Ferritkerne wirksamen ferritischen Abschnitte des Induktionssteges (25) bzw. des die schlitzförmige Ausnehmung (24) aufweisenden Abschnittes (28) jeweils umgeben.

12. Gliederförderer nach einem oder mehreren der vorhergehenden Ansprüche, **dadurch gekennzeichnet, daß** sämtliche Förderelemente (2) gleich ausgebildet sind und mithin Moduleinheiten des Sorters (1) bilden.

13. Gliederförderer nach einem oder mehreren der vorhergehenden Ansprüche, **dadurch gekennzeichnet, daß** die berührungsfreie Energieübertragung bei einer im sog. Mittelfrequenzbereich liegenden Frequenz von bspw. 25 kHz erfolgt.

14. Gliederförderer nach einem oder mehreren der vorhergehenden Ansprüche, **dadurch gekennzeichnet, daß** die singulären Steuereinrichtungen (29) jeweils einen Rechner aufweisen bzw. mit einem Rechner verbunden sind, mittels dessen aus den jeweils einer Steuereinrichtung (29) übermittelten bzw. in dieser enthaltenen Informationen Steuersignale für den Antrieb (8, 7) des betreffenden Quergurtförderers (3) zu errechnen ist.

15. Gliederförderer nach einem oder mehreren der vorhergehenden Ansprüche, **dadurch gekennzeichnet, daß** die Elektromotoren (8) Gleichstrommotoren sind; und daß die berührungsfrei auf die Förderelemente (2) übertragene elektrische Energie - ggf. nach Trennung von den Infomnationssignalen - in den singulären Steuereinrichtungen (29) zu einem Gleichstrom aufzubereiten ist.

## Claims

1. Link conveyor (1) (sorter) for sorting individual items which are to be loaded on the sorter (1) at least at one loading site and are to be discharged from the sorter (1) in each case at a predetermined discharge site of a plurality of discharge sites, comprising a plurality of conveying elements (2) which are disposed one behind the other in the conveying direction (4), are mutually connected to each other in an articulated manner and form a closed-loop, continuous conveying train for receiving in each case an individual item, which conveying elements comprise at their upper end a transverse belt conveyor (3) for receiving and subsequently discharging an individual item, whose continuous conveyor belt (5) is looped around two rollers (6) which are disposed at a mutually spaced disposition and extend in the conveying direction (4) of the sorter (1), of which rollers one is to be driven by an electric motor (8), which is disposed on the relevant or adjacent conveying element (2) and can be activated or deactivated by an individual control device (10;29), in such a manner that the upper belt of the transverse belt conveyor (3) moves towards the predetermined discharge site, wherein the transverse belt conveyor (3) of a conveying element (2) in each case is attached to a supporting device (11) which is connected at its front and rear end section (12 and 13) in an articulated manner to the supporting device (11) of the preceding and following conveying elements (2) to form a link chain consisting of all supporting devices (11), and which by means of rollers (16, 17) is guided and supported at its lower end section remote from the transverse belt conveyor (3) on two parallel (supporting and guiding) rails (14,15) which are disposed at a mutually spaced disposition and define the available conveyor belt, which rollers rotate along the conveyor belt - following the movement of the conveyor belt in the conveying direction (4) - on rails (14, 15) which are continuous and form a closed-loop, wherein the supporting devices (11) of the conveying elements (2) each comprise at least one slot-shaped recess (24) which is formed at least partially from a ferrite material and is formed with a part (28), which is provided with a (secondary) winding, of the supporting device (11), into which recess protrudes in a non-contact manner an induction web (25) which extends in parallel with the rails (14,15) and is provided with an electrical conductor (27) which forms a primary circuit (27), is magnetically coupled to the recess (24) and can be connected to an alternating voltage source or an alternating current source and wherein for the purpose of transmitting information control means are provided by means of which control commands or signals are to be transmitted to the conveying elements (2), **charactarised** in that the rails (14,15) comprise on their innerside facing the other rail continuous, closed-loop webs (19, 20, 25) along which the rollers (16, 17) rotate; that the induction web (25) is formed by a flange-shaped web (for example 25, 19) of one of the rails (for example (14); and that the control means for transmitting control commands or signals to the conveying elements (2) is a control line which is routed on - preferably in - a rail (14) along the conveyor belt, by means of which control line control commands or signals are to be transmitted to the conveying elements (2) by a central control unit which comprises a computer, wherein the electrical conductor (27) which forms the primary circuit of the non-contact energy transmission is disposed in the induction web (25) and is supplied both with electrical energy to drive the electric motors (8) for the transverse belt conveyor (3) and with electrical information signals which are relevant for the control process, and wherein the singular control devices (29) each comprise a separating device such as a filtering device by means of which the information signals relevant for the control process are to be separated from the driving energy being transmitted.

2. Link conveyor as claimed in claim 1, **characterised in that** each conveying element (2) comprises a slot-shaped recess (24) (n=1).

3. Link conveyor as claimed in claim 1 or 2, **characterised in that** the flange-shaped web (25) of the rail (14), which web forms the induction web (25), is designed with a substantially constant thickness.

4. Link conveyor as claimed in any one or several of the preceding claims, **characterised in that** the slot-shaped recesses (24) are substantially U-shaped.

5. Link conveyor as claimed in any one or several of the preceding claims, **characterised in that** the distance between the web (25) forming the induction web (25) and the inner slot wall (26) of the recesses (24) is substantially constant in each case.

6. Link conveyor as claimed in claim 5, **characterised in that** the distance amounts to a maximum few millimetres and is designed such that during the operation the web (25) cannot come into contact with the slot walls (26).

7. Link conveyor as claimed in any one or several of the preceding claims, **characterised in that** the slot-shaped recess (24) of a conveying element (2) is open in each case to one side of the sorter (1).

8. Link conveyor as claimed in any one or several of the preceding claims, **characterised in that** each conveying element (2) is provided with a singular control device (29) for the electric motor (8) of the relevant transverse belt conveyor (3) by means of which in each case amongst other things information regarding the actual current position of the conveying element (2) together with the status of its loading are to be transmitted to the central control device.

9. Link conveyor as claimed in any one or several of the preceding claims, in particular as claimed in claim 8, **characterised in that** information/data transmitted by a singular control device (29) to the central control device is to be transmitted at least in parts also to at least one singular control device (29) of another conveying element (2) and is to be received and processed by said control device.

10. Link conveyor as claimed in any one or several of the preceding claims, **characterised in that** the primary circuit (27) of the non-contact energy transmission is allocated a coupling device in the form for example of a filtering device, by means of which coupling device prior to transmission to the secondary circuit/secondary circuits the electrical energy to be transmitted is to be combined or superimposed with the electrical information signals, which are relevant to the control process.

11. Link conveyor as claimed in any one or several of the preceding claims, **characterised in that** the windings in each case surround the ferritic parts, which are effective as a ferrite core, of the induction web (25) or of the part (28) which comprises the slot-shaped recess (24).

12. Link conveyor as claimed in any one or several of the preceding claims, **characterised in that** all conveying elements (2) are identical in design and consequently form modular units of the sorter (1).

13. Link conveyor as claimed in any one or several of the preceding claims, **characterised in that** the non-contact energy transmission is performed at a frequency of for example 25 kHz which lies in the so-called middle frequency range.

14. Link conveyor as claimed in any one or several of the preceding claims, **characterised in that** the singular control devices (29) comprise in each case a computer or are connected to a computer by means of whose information transmitted from the respective one control device (29) or contained therein control signals for the drive (8,7) of the relevant transverse belt conveyor (3) are to be calculated.

15. Link conveyor as claimed in any one or several of the preceding claims, **characterised in that** the electric motors (8) are direct current motors and that the electrical energy transmitted in a non-contact manner to the conveying elements (2) - where necessary after separating the information signals - is to be processed in the singular control devices (29) to a direct current.

## Revendications

1. Transporteur à maillons (1) (trieur), pour le tri de parties de produit en morceau, à fournir en au moins un point d'alimentation au trieur (1) et à délivrer chaque fois à un point de délivrance prédéterminé, parmi plusieurs postes de fournitures, de nouveau par le trieur (1), avec une pluralité d'éléments de transport (2) disposés les uns derrière les autres, reliés ensemble de manière articulée, formant un tronçon de transport continu, fermé en soi, pour supporter respectivement une partie de produits en morceau, qui présentent chacun, à leur extrémité supérieure, un transporteur à courroie transversal (3), pour supporter et délivrer ultérieurement une partie de produit en moreau, dont la courroie de transport (5) continue est déviée autour de deux rouleaux (6), disposés à distance mutuelle, s'étendant dans la direction de transport (4) du trieur (1), rouleaux dont l'un est à entraîner par un moteur électrique (8) disposé sur l'élément de transport (2) concerné ou voisin, activable, respectivement désactivable, depuis un dispositif de commande (10; 29) individuel, de manière que le brin supérieur du transporteur à courroie transversal (3), se déplace vers le point de délivrance prédéterminé, sachant que le transporteur à courroie transversal (3), d'un élément de transport (2), est fixé respectivement sur un dispositif de soutien (11) qui, en formant une chaîne de maillons, formée de l'ensemble des dispositifs de soutien (11), est relié de façon articulée, à son tronçon d'extrémité avant et arrière (12), respectivement (13), au dispositif de soutien (11) de l'élément de transport (2) précédant, respectivement suivant, et qui est soutenu et guidé, sur son tronçon d'extrémité inférieur, opposée au transporteur à courroie transversal (2), au moyen de rouleaux de déplacement (16, 17), sur deux glissières (de soutien et de guidage) (14, 15), disposées parallèlement à distance mutuelle et déterminant la bande de transport prédéterminée, rouleaux qui circulent le long de la bande de transport, sur des glissières (14, 15), fermées en soi, continues - en suivant l'allure la bande de transport, dans la direction de transport (4) - sachant que les dispositifs de soutien (11) des éléments de transport (2) présentent chacun au moins un évidement (24) en forme de fente, formé par un tronçon (28), formé au moins partiellement de façon ferritique et muni d'un bobinage (secondaire) (28) du dispositif de soutien (11), évidement dans lequel s'étend sans contact une nervure d'induction (25), s'étendant parallèlement aux glissières (14, 15) et munie d'un conducteur électrique (27), pouvant être raccordé à une source de tension alternative ou une source d'intensité alternative, couplé magnétiquement à l'évidement (24), formant un circuit primaire (27) et où, dans un but de transmission d'information, sont prévus des moyens de commande, par l'intermédiaire desquels des ordres et/ou des signaux de commande sont à transmettre/à affecter aux éléments de transport (2), **caractérisé en ce que** les glissières (14, 15) présentent, sur leur face intérieure, tournée vers l'autre glissière, des nervures (19, 20, 25) fermées en soi, continues, le long desquelles circulent les rouleaux ou les galets de déplacement (16, 17), **en ce que** la nervure d'induction (25) est formée par une nervure (par exemple 25, 19) du genre d'un rebord d'une première glissière (par exemple 14); et **en ce que** le moyen de commande, servant à la transmission d'ordres et/ou de signaux de commande aux éléments de transport (2), est une ligne de commande, posée sur - de préférence dans - une glissière (14) le long de la piste de transport, ligne de commande par l'intermédiaire de laquelle sont transmis aux éléments de transport (2), depuis une unité de commande centrale présentant un ordinateur, des ordres et/ou des signaux de commande, où le conducteur électrique (27), formant le circuit primaire de la transmission d'énergie sans contact, est disposé dans la nervure d'induction (25) et est alimenté, tant en énergie électrique pour l'entraînement des moteurs électriques (8), pour les transporteurs à courroie transversaux (3), qu'également avec des signaux d'information électrique concernant la commande, et où les dispositifs de commande (29) singuliers présentent chacun un dispositif séparateur, ainsi qu'un dispositif de filtrage, au moyen desquels les signaux d'information importants pour la commande sont à séparer de l'énergie d'entraînement à transmettre.

2. Transporteur à maillons selon la revendication 1, **caractérisé en ce que** chaque élément de transport (2) présente (n = 1) un évidement (24) en forme de fente.

3. Transporteur à maillons selon la revendication 1 ou 2, **caractérisé en ce que** la nervure (25) du genre d'un rebord, formant la nervure d'induction (25), de la glissière (14), est d'une épaisseur sensiblement constante.

4. Transporteur à maillons selon l'une ou plusieurs des revendications précédentes, **caractérisé en ce que** les évidements (24) en forme de fente sont conformés sensiblement en forme de U.

5. Transporteur à maillons selon l'une ou plusieurs des revendications précédentes, **caractérisé en ce que** l'espacement entre la nervure (25), formant la nervure d'induction (25), et la paroi de fente intérieure (26) des évidements (24) est chaque fois pratiquement constant.

6. Transporteur à maillons selon la revendication 5, **caractérisé en ce que** l'espacement est au maximum de quelques millimètres et est tel que, pendant le fonctionnement, il ne puisse y avoir de contact entre la nervure (25) et les parois de fente (26).

7. Transporteur à maillons selon l'une ou plusieurs des revendications précédentes, **caractérisé en ce que** l'évidement (24) en forme de fente d'un élément de transport (2) est chaque fois ouvert vers un côté du trieur (1).

8. Transporteur à maillons selon l'une ou plusieurs des revendications précédentes, **caractérisé en ce que**, sur chaque élément de transport (2), est prévu un dispositif de commande (29) singulier, pour le moteur électrique (8) du transporteur à courroie transversal (3) concerné, dispositif au moyen duquel, chaque fois, entre autres, des informations, concernant la position instantanée actuelle de l'élément de transport (2), ainsi que son chargement, doivent être transmis au dispositif de commande central.

9. Transporteur à maillons selon l'une ou plusieurs des revendications précédentes, en particulier selon la revendication (8), **caractérisé en ce que** des informations/données, transmises d'un dispositif de commande (29) singulier au dispositif de commande central, sont à transmettre au moins partiellement également à au moins un dispositif de commande singulier (29) d'un autre élément de transport (2), ainsi qu'à recevoir par celui-ci et à traiter.

10. Transporteur à maillons selon l'une ou plusieurs des revendications précédentes, **caractérisé en ce que**, au circuit primaire (27) de la transmission d'énergie sans contact, est associé un dispositif de couplage, réalisé par exemple en tant que dispositif de filtrage, au moyen duquel l'énergie électrique à transmettre, avant transmission au circuit secondaire/aux circuits secondaires, est réunie aux signaux d'information électrique concernant la commande, respectivement est superposée à ceux-ci.

11. Transporteur à maillons selon l'une ou plusieurs des revendications précédentes, **caractérisé en ce que** les enroulements entourent chaque fois les tronçons ferritiques, agissant comme des noyaux de ferrite, de la nervure d'induction (25), respectivement du tronçon (28), présentant l'évidement (24) en forme de fente.

12. Transporteur à maillons selon l'une ou plusieurs des revendications précédentes, **caractérisé en ce que** l'ensemble des éléments de transport (2) sont de réalisation identique et forment ensemble des unités modulaires du trieur (1).

13. Transporteur à maillons selon l'une ou plusieurs des revendications précédentes, **caractérisé en ce que** la transmission d'énergie, se faisant sans contact, est effectuée à ce que l'on appelle une fréquence de plage de fréquence moyenne, de, par exemple, 25 kHz.

14. Transporteur à maillons selon l'une ou plusieurs des revendications précédentes, **caractérisé en ce que** les dispositifs de commande (29) singuliers présentent chacun un ordinateur, respectivement sont reliés à un ordinateur, au moyen duquel, à partir des informations transmises chaque fois à un dispositif de commande (29), ou contenues dans celui-ci, sont calculés des signaux de commande, destinés à l'entraînement (8, 7) du transporteur à courroie (3) concerné.

15. Transporteur à maillons selon l'une ou plusieurs des revendications précédentes, **caractérisé en ce que** les moteurs électriques (8) sont des moteurs à courant continu; et **en ce que** l'énergie électrique, transmise sans contact aux éléments de transport (2) - le cas échéant après séparation vis-à-vis des signaux d'information - sont traités dans les dispositifs de commande (29) singuliers, pour obtenir un courant continu.
